# EUROPÄISCHE PATENTANMELDUNG

(11) **EP 1 503 224 A2**
(43) Veröffentlichungstag der Anmeldung: **02.02.2005**
(21) Anmeldenummer: 04013001.5
(22) Anmeldetag: 02.06.2004
(51) Int. Cl.: G01S 17/93

(54) **Vorrichtung zur Sichtverbesserung bei Kraftfahrzeugen**

(30) Priorität: 30.07.2003 DE 10335189
(71) Anmelder: DaimlerChrysler AG, 70567 Stuttgart (DE)
(72) Erfinder: Eggers, Helmuth, Dr.-Ing., 89077 Ulm (DE); Kurz, Gerhard, Dipl.-Ing., 73240 Wendlingen (DE); Seekircher, Jürgen, Dr.-Ing., 73760 Ostfildern (DE); Wohlgemuth, Thomas, Dipl.-Ing., 72631 Aichtal (DE)

(57) **Zusammenfassung**

Die Erfindung betrifft eine Vorrichtung zur Verbesserung der Sicht in einem Kraftfahrzeug. Sie ist mit einer Strahlungsquelle zur Beleuchtung der Fahrzeugumgebung mit infraroter Strahlung, mit einer infrarotempfindlichen Kamera zur Erfassung wenigstens eines Teiles der beleuchteten Fahrzeugumgebung und mit einer Anzeige zur Darstellung der durch die Kamera erfassten Bildinformationen Versehen. Erfindungsgemäß ist der Kamera ein homogener IR-Filter zugeordnet, welcher unterschiedliche spektrale Transmissionseigenschaften besitzt. Der IR-Filter weist dabei in wenigstens einem Teilbereich des infraroten Spektrums einen Transmissionsgrad in der Größenordnung von 1 auf. Im visuellen Spektralbereich ist die typische Sperrwirkung eines IR-Filters von 10⁻⁵ oder weniger gegeben. Im visuellen Spektrum verhält sich die Transmission des IR-Filters nicht gleichmäßig und umfasst wenigstens einen schmalbandigen Durchlassbereich mit einem Transmissionsgrad vom etwa oder größer 10⁻³ für sichtbares Licht. Durch diese Ausbildung der Vorrichtung zur Verbesserung der Sicht in einem Kraftfahrzeug gelingt es eine sichere Erfassung der Fahrzeugumgebung zu ermöglichen und dadurch den Straßenverkehr sicherer zu gestalten.

## Beschreibung

Die Erfindung betrifft eine Vorrichtung zur Sichtverbesserung bei Kraftfahrzeugen.

Ein äußerst wichtiger Sicherheitsaspekt in Kraftfahrzeugen ist eine ausgezeichnete Sicht bei allen Wetterverhältnissen. Schlechte Sichtverhältnisse bei Dunkelheit kombiniert mit nassen Fahrbahnen oder mit Nebel stellen ein deutlich erhöhtes Unfallrisiko dar. Moderne Assistenzsysteme sollen daher den Fahrer unterstützen und vor Unfällen schützen. Hierzu sind z.B. bereits erste Automobile Nachtsichtsysteme am Markt erhältlich. Im Automobilen Bereich gibt beispielsweise Nachtsichtsysteme welche eine aktive Infrarotbeleuchtung umfassen, um damit die dem Fahrzeug vorausliegende Umgebung mittels Infrarotstrahlung auszuleuchten. Derartige Systeme erfassen dabei zunächst die vorausliegende Fahrzeugumgebung mittels Infrarotsensoren. Die erfassten Umgebungsdaten werden sodann mittels einer Datenverarbeitungseinheit zu einem Bild verarbeitet und auf einer Bildanzeige abgebildet, wo sie vom Fahrer bei Bedarf abgerufen werden können.

Eine Vorrichtung zur Verbesserung der Sicht in einem Kraftfahrzeug ist aus der DE 41 07 850 A1 bekannt. Sie zeigt eine Strahlungsquelle zur Beleuchtung der Fahrzeugumgebung mittels infraroter Strahlung, eine infrarotempfindliche Kamera zur Erfassung wenigstens eines Teiles der beleuchteten Fahrzeugumgebung und eine Anzeige zur Darstellung der durch die Kamera erfassten Bildinformationen. Zusätzlich ist der infrarotempfindlichen Kamera ein IR-Filter zugeordnet, der für die infrarote Strahlung der Strahlungsquelle durchlässig ist, während er für das restliche infrarote Strahlungsspektrum bzw. die sichtbare Strahlung eine hohe Sperrwirkung aufweist. Hierdurch gelingt es, das Tageslicht wie auch das herkömmliche Scheinwerferlicht entgegenkommender Fahrzeuge stark zu bedämpfen und eine Störung der erfassten Bildinformationen durch diese fremden Lichtquellen weitgehend auszuschließen.

Die nachveröffentlichte Patentanmeldung mit dem Aktenzeichen DE 10315741 zeigt eine weitere Vorrichtung zur Verbesserung der Sicht in einem Kraftfahrzeug. Diese Vorrichtung ist mit einer Strahlungsquelle zur Beleuchtung der Fahrzeugumgebung mittels infraroter Strahlung, mit einer infrarotempfindlichen Kamera zur Erfassung wenigstens eines Teiles der beleuchteten Fahrzeugumgebung und mit einer Anzeige zur Darstellung der durch die Kamera erfassten Bildinformationen versehen. Dabei ist der Kamera ein IR-Filter zugeordnet, welcher räumlich getrennte Bereiche unterschiedlicher Transmissionseigenschaften aufweist. Der IR-Filter weist hierbei wenigstens einen räumlichen Bereich mit einem Transmissionsgrad von etwa oder größer 10⁻³ für sichtbare Strahlung oder Teile davon und bevorzugt wenigstens einen zweiten räumlichen Bereich mit einem Transmissionsgrad von etwa 10⁻⁵ für sichtbare Strahlung auf.

Im Gegensatz zu dem o.g. IR-Filter, welcher in unterschiedlichen räumlichen Bereichen unterschiedliche Transmissionseigenschaften aufweist, sind homogene Filter bekannt, welche in allen ihrer räumlichen Bereichen dieselben Transmissionseigenschaften aufweisen. Ein derartiger homogener IR-Filter ist beispielsweise von dem Unternehmen LINOS PHOTONICS unter der Bezeichnung RG 780 erhältlich. Er zeigt im infraroten Spektralbereich, das heißt bei einer Wellenlänge von über 780 nm, einen Transmissionsgrad von etwa 0.98, wohingegen er im Bereich des sichtbaren Lichts einen typischen Transmissionsgrad von etwa 10⁻⁵ aufweist.

Der Erfindung liegt die Aufgabe zu Grunde, eine weitere Vorrichtung zur Verbesserung der Sicht in Kraftfahrzeugen anzugeben, welche mit einfachen Mitteln ein Erkennen von Verkehrsampeln, Bremsleuchten oder Blinkleuchten anderer Verkehrsteilnehmer auf ausreichend verlässliche Weise ermöglicht.

Die Aufgabe wird gemäß der Erfindung durch eine Vorrichtung zur Sichtverbesserung bei Kraftfahrzeugen mit den Merkmalen des Patentanspruchs 1 gelöst. Vorteilhafte Ausgestaltungen und Weiterbildungen der Erfindung werden in den Unteransprüchen aufgezeigt.

Gemäß der Erfindung wird eine Vorrichtung zur Sichtverbesserung bei Kraftfahrzeugen bereitgestellt. Zu diesem Zweck umfasst die Vorrichtung eine Strahlungsquelle zur Beleuchtung der Fahrzeugumgebung mittels infraroter Strahlung. Weiterhin ist eine infrarotempfindliche Kamera zur Erfassung wenigstens eines Teils der beleuchteten Fahrzeugumgebung vorhanden. Hierbei ist der infrarotempfindlichen Kamera ein homogener IR-Filter zugeordnet, welcher in unterschiedlichen Spektralbereichen unterschiedliche Transmissionseigenschaften aufweist. Durch diese unterschiedlichen Transmissionseigenschaften ist gewährleistet, dass zumindest innerhalb eines Teilbereichs des infraroten Spektralbereichs ein Transmissionsgrad in der Größenordnung von 1 gegeben ist. Wohingegen im visuellen Spektralbereich die typische Sperrwirkung des IR-Filter gegeben ist und beispielsweise einen Transmissionsgrad von 10⁻⁵ oder niedriger aufweist, um eine Blendung durch das Scheinwerferlicht entgegenkommender Kraftfahrzeuge zu verhindern. In einer erfinderischen Weise weist dabei der homogene IR-Filter in wenigstens einem Teilbereich des visuellen Spektralbereichs einen Transmissionsgrad von 10⁻³ oder höher auf. Durch die gezielte Auswahl von wenigstens einem Teilbereich mit höherem Transmissionsgrad im visuellen Spektralbereich gelingt es mittels wenigstens einem einzigen IR-Filter, eine sehr einfache Vorrichtung für ein Kraftfahrzeug zu realisieren. Die Vorrichtung ermöglicht es dabei, zum einen die Blendung noch ausreichend zu unterdrücken und zum anderen aber wesentliche Informationen aus der Umgebung des Kraftfahrzeugs, insbesondere von Beleuchtungsquellen im Fahrzeugumfeld, zu erfassen und dem Fahrzeugbenutzer zur Kenntnis zu geben. Wesentliche Umgebungsinformationen sind beispielsweise Blinkleuchten und Bremsleuchten vorausfahrender Fahrzeuge, Verkehrsampeln oder gegebenenfalls andere nicht aktive selbstleuchtende Verkehrszeichen. Durch diese Ausgestaltung des homogenen IR-Filters gelingt es, notwendige Informationen für das sichere Führen des Kraftfahrzeugs durch den Benutzer auf einfache und sichere Weise zur Verfügung zu stellen. Damit gelingt es das Risiko eines Unfalls merklich zu senken.

In einer vorteilhaften Ausgestaltungsform der Erfindung bildet der wenigstens eine Teilbereich des visuellen Spektralbereichs mit einem Transmissionsgrad von 10⁻³ oder höher einen schmalbandigen spektralen Filterbereich. Hierdurch wird es möglich, gezielt diejenigen visuellen Spektralbereiche, in denen interessierende Umgebungslichtquellen emittieren, mittels der Vorrichtung zur Sichtverbesserung gezielt zu betrachten. Dabei hat es sich besonders bewährt, dass sich das Maximum eines derartigen spektralen Filterbereichs beispielsweise bei einer Wellenlänge um 546nm (grünes Licht) oder 700nm (rotes Licht) befindet. Wobei beispielsweise Bremsleuchten vorausfahrender Fahrzeuge und Verkehrsampeln vor allem in diesen beiden Spektralbereichen Licht emittieren.

Gleichsam reflektieren nicht aktiv selbstleuchtende Verkehrszeichen, insbesondere Warnschilder, Licht im visuellen roten Spektralbereich. In Verbindung mit dem homogenen IR-Filter besteht hierbei grundsätzlich die Möglichkeit das Maximum eines spektralen Filterbereichs an eine beliebige Position innerhalb des visuellen oder infraroten Spektralbereichs zu legen. Beispielsweise kann auch ein spektraler Filterbereich mit einer maximalen Transmission im blauen oder orangefarbenen Spektralbereich sinnvoll sein. Wobei z.B. Blaulichter von Einsatzfahrzeugen sowie Blinkleuchten anderer Verkehrsteilnehmer zur Richtungsanzeige oder Blinkleuchten an Baustellen in diesem Spektralbereich Licht emittieren.

Der Transmissionsgrad innerhalb eines derartigen schmalbandigen Filterbereichs im visuellen Spektralbereichs liegt dabei über dem üblichen Dämpfungsbereich eines homogenen IR-Filters (z.B. der IR-Filter von Linos Photonics) und beträgt mindestens 10⁻³. In Abhängigkeit vom jeweiligen zu betrachtenden Spektralbereich kann der Transmissionsgrad hierbei auch wesentlich höher als 10⁻³ sein und beispielsweise den Maximalwert von eins erreichen. Beispielsweise können blaue Spektralbereiche einen höheren Transmissionsgrad aufweisen als rote Spektralbereiche, wobei z.B. rote Lichtquellen häufiger in der Fahrzeugumgebung vorkommen als blaue. Durch eine individuelle Anpassung des Transmissionsgrades an unterschiedliche spektrale Filterbereiche kann die Qualität der Darstellung bei der Anzeige der Bildinformation verbessert werden. Insbesondere kann hierdurch in vorteilhafter Weise eine Blendwirkung, die beispielsweise durch entgegenkommende Kraftfahrzeuge verursacht wird, vermieden werden, da gezielt nur bestimmte Bereiche im visuellen Spektralbereich eine höhere Transmission aufweisen.

Diese spektralen Filterbereiche mit einem im visuellen Spektralbereich über dem Sperrbereich liegenden Transmissionsgrad bilden in einer bevorzugten Ausgestaltungsform der Erfindung schmalbandige Bandpassfilter. Hierbei kann die Halbwertsbreite des Spektralfilters z.B. nur wenige Nanometer betragen. Dabei wird ein Spektralfilter umso schmalbandiger gewählt, je höher die erwartete emittierte Lichtenergie im jeweiligen Spektralbereich ist. Die diesen Spektralbereichen benachbarten Bereiche weisen dabei gegenüber visueller Strahlung ein Sperrverhalten auf, wobei der Transmissionsgrad in den Bereichen mit Sperrverhalten kleiner als die übliche Dämpfung des homogenen IR-Filters ist, beispielsweise 10⁻⁵ beträgt. Dadurch wird es in besonders Vorteilhafter Weise möglich, die zu detektierende Lichtenergie z.B. von Scheinwerfern entgegenkommender Kraftfahrzeuge zu dämpfen. Beispielsweise zeichnen sich handelsübliche Xenon-Scheinwerfer durch ein gleichmäßiges Emissionsspektrum aus, welches sich über den gesamten visuellen Spektralbereich erstreckt. Derartige Lichtquellen würden ohne diese Einschränkung auf bestimmte visuelle Spektralbereiche zu einer Blendwirkung bei der Anzeige der mittels der Vorrichtung zur Sichtverbesserung aufgenommenen Bilddaten führen. Auch ist hierbei eine Verwendung von Breitbandpässen möglich, wodurch das Niveau der Dämpfung insgesamt angehoben wird.

Bei einer weiteren vorteilhaften Ausgestaltungsform der Erfindung bildet der homogene IR-Filter in wenigstens einem Teilbereich des visuellen Spektralbereichs einen schmalbandigen spektralen Sperrbereich, in welchem die Transmission im Bezug auf die anderen Spektralbereiche signifikant unter einen Wert von 10⁻⁵, vorzugsweise unter 10⁻⁷, unterdrückt wird. Hierdurch wird es möglich, gezielt diejenigen visuellen Spektralbereiche zu unterdrücken, in denen unerwünschte Umgebungslichtquellen visuelle Strahlung emittieren. Beispielsweise sind die in modernen Kraftfahrzeugscheinwerfern eingesetzten Xenonlampen üblicherweise durch eine leichte Blaufärbung der emittierten visuellen Strahlung zu erkennen. Daher weist das Spektrum dieser Xenonlampen eine Emissionsbande bei ca. 480nm auf. Diese Emissionsbande kann beispielsweise mittels einem homogenen IR-Filter unterdrückt werden, welcher im visuellen Spektralbereich einen schmalbandigen Sperrbereich mit einem Maximum bei 480nm besitzt und in dem keine Transmission stattfindet. Allgemein kann hierbei das Maximum eines derartigen spektralen Sperrbereichs analog zu den oben genannten spektralen Filterbereichen, welche für visuelle Strahlung transparent sind, beliebig gewählt werden.

In besonders vorteilhafter Weise handelt es sich bei dem IR-Filter um einen Absorptionsfilter. Bei optischen Filtern wird allgemein die hindurchtretende Strahlung wellenlängenabhängig selektiert und geschwächt oder nur wellenlängenabhängig geschwächt. Bei Absorptionsfiltern erfolgt die Schwächung der durchgehenden Strahlung im wesentlichen durch Absorption im Filtermaterial. Das Absorptionsverhalten unterschiedlicher Filtermaterialien wird hierbei durch den Absorptionskoeffizienten beschrieben. Absorptionsfilter können dabei beispielsweise in der Form von Massivfiltern aufgebaut sein, z.B. als Farbglas-, Kristall-, Halbleiter- oder Kunststofffilter. Auch sind Ausführungen als Folien- oder Schichtfilter bekannt, z.B. als Gelatine-, Lack-, oder Metallfilter. Darüber hinaus sind beispielsweise auch Flüssigkeits- und Gasfilter in Küvetten bekannt.

Alternativ dazu kann es sich bei dem IR-Filter auch um einen Reflexionsfilter handeln. Wobei hierbei nicht die Fresnelsche Reflexion zu verstehen ist, welche beispielsweise an der Grenzschicht beim Übergang zwischen der Luft und dem jeweiligen Filtermedium auftritt und im wesentlichen von der Brechzahl des jeweiligen Filtermediums abhängt. Unter Reflexionsfilter sind hierbei beispielsweise Interferenzfilter zu verstehen. Die spektralen Eigenschaften von Interferenzfiltern sind dabei durch die Interferenzen bei Mehrfachreflexionen in Dünnschichtsystemen bedingt. Beispielsweise werden Interferenzfilter als Metallschichtfilter aufgebaut, wobei z.B. eine transparente dielektrische Schicht durch zwei Teildurchlässige metallische Spiegelschichten begrenzt wird. Auch können hierbei mehrere einzelne Interferenzfilter (Kavitäten) hintereinandergeschaltet werden. Wobei die Schichtdicke der Abstandslagen zwischen den Spiegelschichten die spektrale Lage des Transmissionsbereichs festlegt und bei zunehmender Zahl der Einzelschichten im Reflektor die Bandbreite vergrößert werden kann. Interferenzfiltern erzeugen Dabei sogenannte Nebenmaxima welche beispielsweise mittels Farbgläsern herausgefiltert werden können.

Auch besteht die Möglichkeit, dass es sich bei dem IR-Filter um einen Polarisationsfilter handelt. Die Filtereigenschaften von Polarisationsfiltern beruhen dabei auf einer Wellenlängenabhängigkeit des Polarisationsgrades. Licht kann im Allgemeinen beispielsweise linear, zirkular oder elliptisch polarisiert sein. Mittels Polarisationsfiltern wird hierbei nur das Licht einer bestimmten Polarisationsrichtung übertragen. Beispielsweise sind Polarisationsfilter für linear polarisiertes Licht bekannt, welche linear polarisiertes Licht z.B. entweder in horizontaler oder vertikaler Richtung übertragen. Auch besteht im Zusammenhang mit der Erfindung die Möglichkeit, dass es sich bei dem IR-Filter um einen Streufilter handelt. Die Filtereigenschaften von Streufiltern beruhen hierbei auf einer Wellenlängenabhängigkeit der Streucharakteristik.

Bei einer vorteilhaften Ausgestaltung der Erfindung ist der IR-Filter in die infrarotempfindliche Kamera integriert. Die infrarotempfindliche Kamera ist dabei in einer bevorzugten Weise als CCD- oder als CMOS-Kamera realisiert. Die bevorzugten CMOS-Kameras zeigen einen nichtlinearen logarithmischen Empfindlichkeitsverlauf, was die der Kamera nachfolgende Bildauswertung der Bilddaten mit dem extremem Dynamikumfang wesentlich erleichtert. Die CCD-Kameras zeigen dabei einen sehr kompakten, robusten und kostengünstigen Aufbau. In vorteilhafter Weise ist der IR-Filter hierbei als separate Baugruppe unabhängig von anderen Bauteilen in das Gehäuse der infrarotempfindlichen Kamera integriert. In vorteilhafter Weise bleibt der IR-Filter dadurch vor Umwelteinflüssen geschützt.

Bei einer weiteren vorteilhaften Ausgestaltung der Erfindung ist der IR-Filter in das Objektiv der Kamera integriert. Der verwendete homogene IR-Filter wird dabei bevorzugt als Glasfilter realisiert, der durch seine Glasmischung bzw. durch seine Beschichtungen die gewünschten Filtereigenschaften, insbesondere seine wellenlängenabhängige Transmissionseigenschaften aufweist. Auch besteht hierbei die Möglichkeit andere Filtermaterialien zur Realisierung des IR-Filters heranzuziehen, wie z.B. Polymere. Der IR-Filter wird bevorzugt als runder Filter direkt mit dem Objektiv der infrarotempfindlichen Kamera verbunden, indem er auf das Kameraobjektiv aufgesteckt, aufgeschraubt oder mit einem Bajonettverschluß gesichert wird. Auch besteht hierbei die Möglichkeit, dass der IR-Filter in der Form einer Schicht z.B. direkt auf die Oberfläche des Objektivs aufgebracht wird. Hierbei ist es auch möglich, die Schicht als eine Zwischenschicht des Objektivs vorzusehen. Darüber hinaus sind auch andere Ausbildungen eines IR-Filters möglich, der der infrarotempfindlichen Kamera so zugeordnet ist, dass er in dem Strahlengang des durch die infrarotempfindliche Kamera erfassten Umgebungsbereiches angeordnet ist. Durch die Verwendung des IR-Filters in Verbindung mit dem Kameraobjektiv ist eine sehr einfache, robuste Anordnung in einer Vorrichtung zur Verbesserung der Sicht in einem Kraftfahrzeugen geschaffen.

Auch besteht die Möglichkeit, dass der IR-Filter direkt in den Chip der Kamera integriert ist. Der Kamerachip ist dabei im wesentlichen aus lichtempfindlichen Fotoelementen aufgebaut, welche beispielsweise in der Form einer Kamerazeile oder als Array angeordnet sein können. Dabei sieht eine besonders vorteilhafte Ausgestaltungsform der erfindungsgemäßen Vorrichtung die Möglichkeit vor, dass der IR-Filter in der Form einer Lichtdurchlässigen Schicht direkt auf das Substrat der Fotoelemente aufgebracht wird. Hierdurch bleibt der IR-Filter in vorteilhafter Weise einerseits vor Umwelteinflüssen geschützt, andererseits werden keine weiteren Bauteile wie Fassungen oder separate Träger benötigt.

Alternativ dazu sieht es eine Ausgestaltungsform der Erfindung vor, dass der IR-Filter als separates Bauelement außerhalb der Kamera angeordnet ist. Hierbei sind für den Einbau des IR-Filters in den optischen Strahlengang, zwischen den Kamerachip und das zu beobachtende Fahrzeugumfeld, unterschiedlichste Verbauorte am Kraftfahrzeug denkbar. Beispielsweise kann ein Einbau von IR-Filtern in Verbindung mit den Scheinwerfergläsern oder den Fahrzeugscheiben vorgenommen werden. Alternativ dazu besteht beispielsweise auch die Möglichkeit Aussparungen für einen IR-Filter im Bereich des Kühlergrills oder sonstiger Karosserieanbauteile sowie der Karosserie selbst vorzusehen.

In einer vorteilhafter Weise der Erfindung handelt es sich bei dem IR-Filter um eine Kombination mehrerer Filter. Beispielsweise existieren bereits unterschiedlichste Materialen die zur Verwendung als optisches Filtermaterial geeignet sind. Jedes dieser Filtermaterialien weist dabei ein individuelles Wellenlängenabhängiges Transmissionsspektrum auf. Zur Erzeugung einer speziellen Transmissionscharakteristik, welche insbesondere im Zusammenhang mit der Erfindung zur Sichtverbesserung im Rahmen einer Umgebungserfassung bei Kraftfahrzeugen geeignet ist, kann es sich als vorteilhaft erweisen, dass mehrere Filter zu einer IR-Filtereinheit kombiniert werden. Hierbei können beispielsweise Filter aufgrund ihrer spektralen Eigenschaften in vorteilhafter Weise kombiniert werden, wobei z.B. zwischen Kantenfiltern, Spektralfiltern (Breitband-, Schmalband- und Bandfiltern) sowie Neutralgraufiltern unterschieden wird. Auch ist eine Kombination unterschiedlicher Filter anhand deren Physikalischem Wirkprinzip möglich, wobei wie oben bereits beschrieben wurde z.B. zwischen Absorptions-, Reflexions-, Polarisations- und Streufiltern unterschieden wird. Dem Fachmann auf dem Gebiet der Optik sind darüber hinaus weitere Ausgestaltungen für optische IR-Filter bekannt. Bei der Kombination mehrerer Filter zu einem IR-Filter müssen die einzelnen Filter nicht zwingend in direkter räumlicher Verbindung miteinander stehen. Hierbei kann es insbesondere von Vorteil sein, falls die einzelnen Filter getrennt voneinander an unterschiedlichen Stellen angeordnet werden. Im Zusammenhang mit Kraftfahrzeugen bietet es sich für den fall, dass sich die Kamera im Scheinwerfer befindet beispielsweise an, getrennt jeweils einen Filter im Scheinwerferglas, Kameraobjektiv und auf dem Kamerachip anzuordnen.

Die Erfindung ist nicht auf die zuvor beschriebenen expliziten Ausbildungen der Erfindung beschränkt, vielmehr sind auch einfache, naheliegende Abwandlungen der explizit beschriebenen Ausbildungen der erfindungsgemäßen Vorrichtung zur Verbesserung der Sicht in einem Kraftfahrzeug durch die Erfindung umfasst.

Im folgenden wird die Erfindung anhand einer beispielhaften Ausführung einer Vorrichtung zur Verbesserung der Sicht in einem Kraftfahrzeug bzw. einem IR-Filter für eine solche näher erläutert. Dabei zeigen:
- Fig. 1: den schematischen Aufbau einer erfindungsgemäßen beispielhaften Vorrichtung zur Verbesserung der Sicht in einem Kraftfahrzeug
- Fig. 2: beispielhaft die spektralen Eigenschaften der erfindungsgemäßen Vorrichtung zur Verbesserung der Sicht in einem Kraftfahrzeug

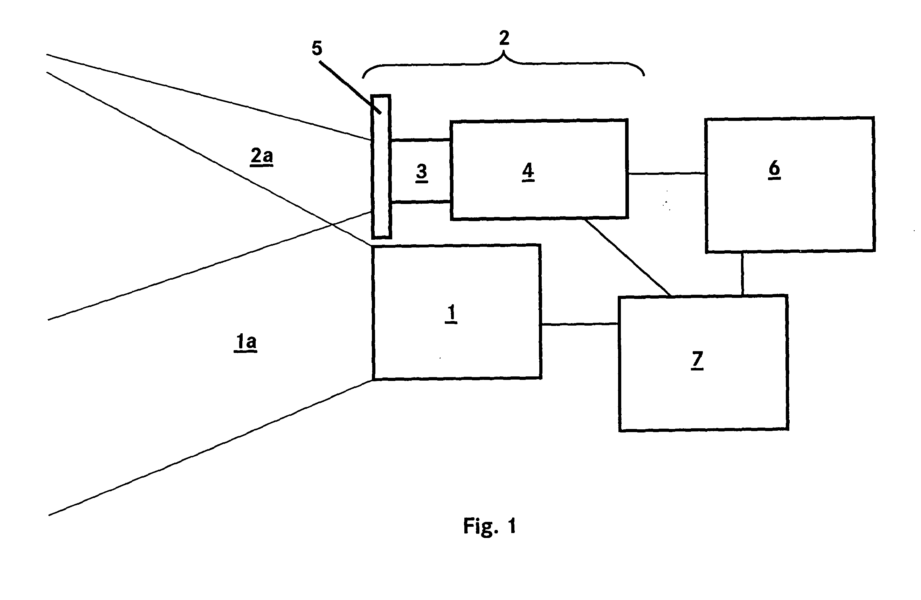

Fig. 1 zeigt in einer schematischen Darstellung das Zusammenwirken bzw. den Aufbau einer erfindungsgemäßen Vorrichtung zur Verbesserung der Sicht in einem Kraftfahrzeug.

Mit einer Infrarotstrahlungsquelle 1, welche als Infrarot-LED-Scheinwerfer ausgebildet ist, wird die Fahrzeugumgebung mit infraroter Strahlung beleuchtet. Der mit infraroter Strahlung beleuchtete Bereich 1a wird zumindest teilweise durch die infrarotempfindliche Kamera 2 erfasst. Der Erfassungsbereich der infrarotempfindlichen Kamera 2a ist hier nicht deckungsgleich mit dem Beleuchtungsbereich 1a der infraroten Strahlungsquelle 1. Die durch die Strahlungsquelle 1 beleuchteten Elemente der Umgebung, welche sich in dem Erfassungsbereich 2a der Kamera 2 befinden, sowie Elemente, die sich nicht in dem beleuchteten aber dennoch im Erfassungsbereich der Kamera 2a befinden, werden durch die infrarotempfindliche Kamera 1 erfasst. Diese Erfassung erfolgt mit Hilfe des Objektives 3 und der Bildverarbeitungseinheit 4 in der Kamera 2.

Darüber hinaus ist das Objektiv 3 mit einem homogenen IR-Filter 5 versehen, wobei der homogene IR-Filter 5 in wenigstens einem Teilbereich des visuellen Spektralbereichs einen Transmissionsgrad von 10⁻³ oder höher aufweist. Zudem bildet der homogene IR-Filter 5 in wenigstens einem Teilbereich des visuellen Spektrums einen schmalbandigen Filterbereich, in welchem keine Transmission stattfindet. Wohingegen zumindest in einem Teilbereichs des infraroten Spektralbereichs, bei Wellenlängen über 780nm, ein Transmissionsgrad in der Größenordnung von 1 gegeben ist. Dementsprechend werden dem Objektiv 3 und der Bildverarbeitungseinheit 4 der Kamera 2 nicht nur Bildsignale, welche mittels infraroter Strahlung übertragen werden, zugeführt, sondern darüber hinaus auch Bildsignale von nennenswerter Stärke, welche mittels visueller Strahlung übertragen werden. Durch die Zuführung dieser beiden Arten von Bildinformationen ist sichergestellt, dass sowohl die mit IR-Strahlung, das heißt einerseits durch die IR-Strahlungsquelle 1 bestrahlten Elemente der Umgebung wie auch die passiv leuchtenden, beispielsweise Wärmestrahlung ausstrahlenden Elemente sicher anhand ihrer IR-Strahlung erfasst und dargestellt werden können, wie auch die Elemente, welche visuelle Strahlung in ausreichender Stärke emittieren. Ein vollständiges Unterdrücken der sichtbaren Strahlung, wie dies beim Stand der Technik der Fall ist, wird erfindungsgemäß nicht realisiert.

Dadurch gelingt es beispielsweise, vorausschauend Kraftfahrzeuge mit ihren Bremsleuchten oder auch Blinkerleuchten oder auch das grüne Licht von Verkehrsampeln oder auch ein Blaulicht von Einsatzfahrzeugen sicher durch die Kamera 2 mit dem homogenen IR-Filter 5, dem Objektiv 3 und der Bildverarbeitungseinheit 4 zu erfassen und die auf Basis der visuellen Strahlung übertragenen und erfassten Bildinformationen sowie die auf Basis der infraroten Strahlung übertragenen und erfassten Bildinformationen in der der Kamera 2 zugeordneten Anzeige 6 sicher darzustellen und dem Fahrzeugführer zur Aufnahme zur Verfügung zu stellen. Die Anzeigeeinheit 6 ist typischerweise als flächiges TFT- oder LCD-Display oder auch als Headup-Display ausgestaltet. Jedoch ist es im Zusammenhang mit der Erfindung nicht zwingend erforderlich, dass die Bildinformationen auf der Anzeige 6 dargestellt werden. In vorteilhafter Weise können die erfassten Bildinformationen mittels einer hier nicht dargestellten zusätzlichen Rechnereinheit weiterverarbeitet werden, beispielsweise eine Objekterkennung durchgeführt werden. Darüber hinaus sind mittels der Bildverarbeitung Funktionalitäten, wie Anpassung des Dynamikumfangs, Selektion bestimmter Bildinformationen, Hervorhebung bestimmter Bildinformationen, Klassifizierung der erfassten Bildinformationen oder auch nur Farb- oder Helligkeitskorrekturen durch die Bildverarbeitung möglich.

Die Strahlungsquelle 1, die Kamera 2 und die Anzeige 6 sind mit einer Steuereinheit 7 der Vorrichtung zur Verbesserung der Sicht in einem Kraftfahrzeug verbunden, welche die einzelnen Komponenten der Vorrichtung zielgerichtet ein-, ausschaltet bzw. steuert. Dabei ist die Steuerung so ausgeführt, dass eine Gefährdung der Umgebung beispielsweise durch die Beleuchtung mittels der Infrarot-Strahlungsquelle weitgehend ausgeschlossen ist.

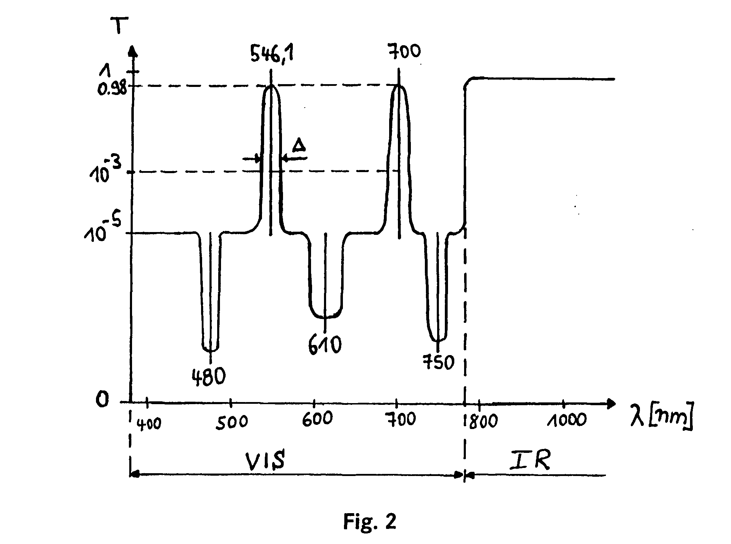

Fig. 2 zeigt beispielhaft die spektralen Eigenschaften der erfindungsgemäßen Vorrichtung zur Verbesserung der Sicht in einem Kraftfahrzeug.

Hierbei wird insbesondere der spektrale Transmissionsgrad des homogenen IR-Filters gezeigt. Dabei ist in der Fig. 2 der Spektralbereich in einen visuellen Spektralbereich (VIS = 380nm - 780nm) in dem sichtbare Strahlung auftritt und in einen infraroten Spektralbereich in dem nichtsichtbare Infrarotstrahlung (IR > 780nm) auftritt, eingeteilt. Im infraroten Spektralbereich weist der homogene IR-Filter dabei durchgängig einen Transmissionsgrad von 0.99 auf. Im sichtbaren Spektralbereich dagegen weist der homogene IR-Filter zwei Durchlassbereiche mit einem Transmissionsgrad größer 10⁻³ für sichtbare Strahlung auf. Einer dieser Durchlassbereiche transmittiert dabei grünes Licht (546, 1nm) und der andere Durchlassbereich transmittiert rotes Licht (700nm), wodurch ein Erkennen wichtiger Informationen sichergestellt wird, beispielsweise Informationen von Verkehrsampeln. Beispielhaft ist hierbei die Halbwertsbreite Δ beider Durchlassbereiche dargestellt, sie beträgt hierbei ca. 25nm. Zudem befinden sich im visuellen Spektralbereich drei Sperrbereiche mit einem Transmissionsgrad der unter 10⁻⁵ liegt, wobei die typische Dämpfung im visuellen Spektralbereich 10⁻⁵ beträgt. Ein Maximum dieser Sperrbereiche befindet sich beispielsweise bei einer Wellenlänge von 480nm. Dabei handelt es sich um diejenige Wellenlänge bei der z.B. Xenon-Lampen üblicherweise eine Emissionsbande aufweisen, dies wird dadurch deutlich, dass Xenon-Lampen ein bläuliches Licht emittieren. Durch den homogenen IR-Filter wird somit der blaue Anteil von Xenon-Lampen gedämpft, welcher bei entgegenkommenden Fahrzeugen insbesondere bei Regen als störend empfunden wird. Mit der erfindungsgemäßen Vorrichtung zur Sichtverbesserung bei Kraftfahrzeugen und mittels dem homogenen IR-Filter gelingt es einerseits, eine Blendwirkung im visuellen Spektrum, welche beispielsweise durch entgegenkommende Fahrzeuge verursacht wird, zu vermeiden. Andererseits wird es möglich, notwendige Informationen für das sichere Führen des Kraftfahrzeugs auf einfache und sichere Weise zur Verfügung zu stellen.

## Patentansprüche

1. Vorrichtung zur Sichtverbesserung bei Kraftfahrzeugen, mit einer Strahlungsquelle zur Beleuchtung der Fahrzeugumgebung mit infraroter Strahlung, einer infrarotempfindlichen Kamera zur Erfassung wenigstens eines Teils der beleuchteten Fahrzeugumgebung, mit einem der Kamera zugeordneten homogenen IR-Filter,
**dadurch gekennzeichnet,**
**dass** der homogene IR-Filter in wenigstens einem Teilbereich des visuellen Spektralbereichs einen Transmissionsgrad von 10⁻³ oder höher aufweist.

2. Vorrichtung zur Sichtverbesserung bei Kraftfahrzeugen nach einem der vorstehenden Ansprüche,
**dadurch gekennzeichnet,**
**dass** der wenigstens eine Teilbereich des visuellen Spektralbereichs mit einem Transmissionsgrad von 10⁻³ oder höher einen schmalbandigen spektralen Filterbereich bildet.

3. Vorrichtung zur Sichtverbesserung bei Kraftfahrzeugen nach einem der vorstehenden Ansprüche,
**dadurch gekennzeichnet,**
**dass** der homogene IR-Filter in wenigstens einem Teilbereich des visuellen Spektralbereichs einen schmalbandigen spektralen Sperrbereich bildet, in welchem die Transmission im Bezug auf die anderen Spektralbereiche signifikant unterdrückt wird.

4. Vorrichtung zur Sichtverbesserung bei Kraftfahrzeugen nach einem der vorstehenden Ansprüche
**dadurch gekennzeichnet,**
**dass** es sich bei dem IR-Filter um einen Absorptionsfilter handelt.

5. Vorrichtung zur Sichtverbesserung bei Kraftfahrzeugen nach einem der vorstehenden Ansprüche
**dadurch gekennzeichnet,**
**dass** es sich bei dem IR-Filter um einen Reflexionsfilter handelt.

6. Vorrichtung zur Sichtverbesserung bei Kraftfahrzeugen nach einem der vorstehenden Ansprüche
**dadurch gekennzeichnet,**
**dass** es sich bei dem IR-Filter um einen Polarisationsfilter handelt.

7. Vorrichtung zur Sichtverbesserung bei Kraftfahrzeugen nach einem der vorstehenden Ansprüche
**dadurch gekennzeichnet,**
**dass** es sich bei dem IR-Filter um einen Streufilter handelt.

8. Vorrichtung zur Sichtverbesserung bei Kraftfahrzeugen nach einem der vorstehenden Ansprüche
**dadurch gekennzeichnet,**
**dass** der IR-Filter in die infrarotempfindliche Kamera integriert ist.

9. Vorrichtung zur Sichtverbesserung bei Kraftfahrzeugen nach Anspruch 8
**dadurch gekennzeichnet,**
**dass** der IR-Filter in das Objektiv der Kamera integriert ist.

10. Vorrichtung zur Sichtverbesserung bei Kraftfahrzeugen nach Anspruch 8
**dadurch gekennzeichnet,**
**dass** der IR-Filter direkt in den Chip der Kamera integriert ist.

11. Vorrichtung zur Sichtverbesserung bei Kraftfahrzeugen nach einem der vorstehenden Ansprüche
**dadurch gekennzeichnet,**
**dass** der IR-Filter als separates Bauelement außerhalb der Kamera angeordnet ist.

12. Vorrichtung zur Sichtverbesserung bei Kraftfahrzeugen nach einem oder mehreren der vorstehenden Ansprüche
**dadurch gekennzeichnet,**
**dass** es sich bei dem IR-Filter um eine Kombination mehrer Filter handelt.
